**Europäisches Patentamt**

**European Patent Office**

**Office européen des brevets**

(19)

(11) Veröffentlichungsnummer: **0 491 997 A1**

# EUROPÄISCHE PATENTANMELDUNG

(12)

(21) Anmeldenummer: **90125705.5**

(22) Anmeldetag: **28.12.90**

(51) Int. Cl.5: **B01D 35/02**, C22F 1/00

(43) Veröffentlichungstag der Anmeldung:
**01.07.92 Patentblatt 92/27**

(84) Benannte Vertragsstaaten:
**AT DE FR GB IT**

(71) Anmelder: **KARL KÜFNER KG**
**Rossentalstrasse 87-89**
**W-7470 Albstadt-Truchtelfingen(DE)**

(72) Erfinder: **Meititz, Horst**
**Unter Hang 31**
**W-7470 Albstadt-Tailfingen(DE)**
Erfinder: **Sebig, Jörg**

**Auf Gstangen 2**
**W-7460 Balingen(DE)**
Erfinder: **Schneider, Rolf**
**Heili-Brünie-Strasse 67**
**W-7470 Albstadt-Tailfingen(DE)**
Erfinder: **Haasis, Christian**
**Kennen Steige 18**
**W-7470 Albstadt-Pfeffingen(DE)**

(74) Vertreter: **Eitle, Werner, Dipl.-Ing. et al**
**Hoffmann, Eitle & Partner Patentanwälte**
**Arabellastrasse 4**
**W-8000 München 81(DE)**

(54) Hohlkörper, insbesondere Rohrstück oder Zylinderkörper.

(57) Die Erfindung betrifft einen Gase oder Flüssigkeiten aufnehmenden oder von diesen durchströmten, an mindestens einer Seite offenen Hohlkörper, insbesondere ein Rohrstück oder ein Zylinderkörper, der mindestens eine Wanddurchbrechung (4) in seiner einen Hohlraum (1) umschließenden Wand (2) hat, die in den Hohlraum einmündet und an der Einmündung von einem Filtergewebe überspannt wird. Gemäß der Erfindung ist dieser Filtergewebering (6) in eine an der Innenseite der Wand (2) angeordnete Ringnut (3) eingesetzt, in welche die Wanddurchbrechung einmündet. Der Filtergewebering hat ferner Gewebefäden (7, 8, 9), die mindestens zum Teil aus einem Formgedächtnismetall bestehen, das bei zur Montage vorausgegangener Verformung durch Erwärmung sich in seine ursprüngliche Form zurückbildet.

Die Erfindung betrifft auch ein Verfahren zum Einsetzen eines derartigen Filtergeweberinges (6) in die vorgenannte Ringnut (3).

Fig. 1

Die Erfindung betrifft einen Gase oder Flüssigkeiten aufnehmenden oder von diesen durchströmten, an mindestens einer Seite offenen Hohlkörper, insbesondere ein Rohrstück oder ein Zylinderkörper mit mindestens einer in seiner einen Hohlraum umschließenden Wand angeordneten Wanddurchbrechung, die in den Hohlraum einmündet und an der Einmündung von einem Filtergewebering überspannt wird.

Hohlkörper dieser Gattung sind zu Filterzwekken bereits bekannt. Bei diesen bekannten Hohlkörpern ist deren Hohlraum von derjenigen Stelle, die den Filterring aufnehmen soll, bis zu seiner offenen Seite, von der her er in den Hohlkörper eingeführt werden soll, mit einem solchen größeren Querschnitt als der anschließende Abschnitt des Hohlraumes versehen, daß der Filtergewebering ohne Schwierigkeit durch diesen größeren Hohlraumquerschnitt hindurch in den Hohlkörper bis zu seiner vorgesehenen Endstellung eingeführt werden kann. Diese Abstufung des Hohlraumquerschnittes führt jedoch zu einer umständlichen Herstellungsweise des Hohlkörpers und befriedigt auch nicht beim Gebrauch des Hohlkörpers (z.B. nicht zufriedenstellende Strömungsverhältnisse im Hohlraum des Hohlkörpers).

Der Erfindung liegt daher die Aufgabe zugrunde, einen Hohlkörper der eingangs genannten Gattung zu schaffen, dessen Filtergewebering so ausgebildet und so an der Einmündung der in den Hohlraum einmündenden Wanddurchbrechung angeordnet ist, daß die Strömungsverhältnisse in seinem Hohlraum nicht beeinträchtigt werden und er trotzdem auf einfache Weise in den Hohlraum von dessen einer offenen Seite her eingebracht und dort sicher festgelegt werden kann. Dies wird erfindungsgemäß durch die im kennzeichnenden Teil des Anspruchs 1 angegebenen Merkmale erreicht.

Formgedächtnismetalle sind in Form von Formgedächtnislegierungen z.B. auf Kupfer- oder Titan-Nickel-Basis ($\beta$-Cu- und $\beta$-NiTi-Legierungen) bekannt und z.B. in der Zeitschrift "METALL" Jahrgang 41, Heft 5 vom Mai 1967, Seiten 488 bis 493 beschrieben. Durch den Formgedächtniseffekt dieser Metallegierungen mit oder ohne Einwirkung äußerer mechanischer Spannungen wird der Werkstoff zunächst einer Formänderung unterworfen. Wird er anschließend einer Erwärmung oberhalb einer bestimmten Temperatur ausgesetzt, beginnt er sich an seine ursprüngliche Gestalt im unverformten Zustand zu erinnern, um sich in diese Form zurückzubilden. Diese Formgedächtniseigenschaft können alle Werkstoffe haben, die eine martensitische Umwandlung zeigen, insbesondere martensitisch sich umwandelnde intermetallische Verbindungen von Kupfer oder Nickel mit kubisch raumzentrierter Kristallstruktur der Hochtemperaturphase $\beta$.

Die erfindungsgemäße Ausbildung des Filtergeweberinges aus einem Gewebe mit Gewebefäden aus einem solchen Formgedächtnismetall ermöglicht, daß der Ring zum Einbringen in die Ringnut des Hohlkörpers zunächst durch Einbeulen auf einen gegenüber seine ursprünglichen kleineren Außendurchmesser gebracht werden kann, der ein leichtes Einbringen des Ringes in den Hohlraum zur Ringnut gestattet, und dann allein durch Erwärmung in seine ursprüngliche Form zurückgebracht werden kann, wobei er sich unter Rückbildung der Einbeulung fest in die Ringnut einlegt. Durch die dabei mögliche feste Anlage des Ringes an den Boden der Ringnut benötigt der Ring weder Randeinfassungen noch Zwischenstege aus Kunststoff oder Metall, wodurch sich eine größere Filtrationsfläche ergibt. Im Bedarfsfall ist es aber natürlich auch möglich, den Filtergewebering mit einer Randeinfassung und Querstegen auszubilden. Eine Randeinfassung kann dann zweckmäßig sein, wenn die Gefahr besteht, daß sich das Gewebe des Filtergeweberings an dessen Rand vor seiner endgültigen Montage im Hohlkörper auflöst.

Selbstverständlich können alle Gewebefäden des Filtergeweberinges aus einem Formgedächtnismetall bestehen. Gegebenenfalls genügt es aber, daß zumindest ein Teil der sich in Umfangsrichtung des Filtergeweberinges erstreckenden Gewebefäden aus Formgedächtnismetall besteht. Besteht nur ein Teil dieser in Umfangsrichtung sich erstreckenden Gewebefäden aus Formgedächtnismetall, können diese zweckmäßig an den Rändern des Geweberinges angeordnet sein. Gewebefäden aus Formgedächtnismetall können auch in mehreren Lagen übereinander im Gewebe angeordnet sein.

Die Erfindung betrifft auch ein Verfahren zum Einsetzen eines solchen Filtergeweberinges mit aus Formgedächtnismetall bestehenden Gewebefäden in eine solche Ringnut an der Innenseite der Wandung eines Hohlkörpers unter Anwendung der vorgenannten Formgedächtniseigenschaften des Materials dieser Gewebefäden.

Die Erfindung ist bei Filterringen aus jeglichem technischen Gewebe anwendbar.

In der Zeichnung ist ein besonders vorteilhaftes Ausführungsbeispiel der Erfindung bei einem Rohrstück von kreisrundem Querschnitt dargestellt:

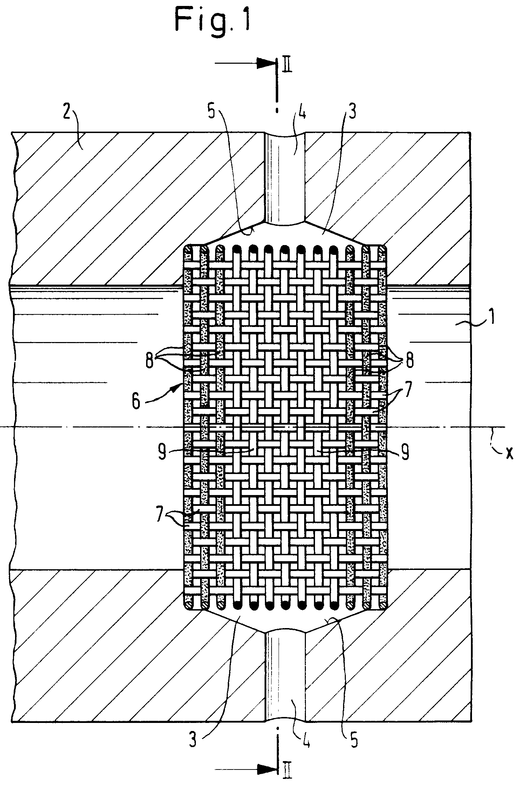

Fig. 1      zeigt einen Axialschnitt durch dieses Rohrstück, abgebrochen dargestellt;

Fig. 2      ist ein Querschnitt durch dieses Rohrstück nach Linie II-II in Fig. 1;

Fig. 3      zeigt im selben Querschnitt den Filtergewebering bei seinem Einbringen in das Rohrstück.

Das in der Zeichnung dargestellte Ausführungsbeispiel betrifft ein Rohrstück mit kreisförmigem Querschnitt, das zum Hindurchströmen von Gasen oder Flüssigkeiten vorgesehen ist. Dieses Rohrstück ist an seinem in der Zeichnung linken Ende abgebrochen dargestellt und an seinem in der Zeichnung rechten Ende offen. An der Innenseite seiner den Hohlraum 1 umschließenden Wand 2 ist eine zum Hohlraum 1 offene Ringnut 3 vorgesehen, in welche zwei diametral gegenüberliegende Wanddurchbrechungen 4 einmünden. Die Ringnut 3 hat einen zu den Wanddurchbrechungen 4 hin abfallenden Boden 5.

In diese Ringnut ist ein Filtergewebering 6 eingesetzt, der eine in Richtung der Längsachse x des Rohrstückes gemessene Breite hat, die der Weite der Nut 3 entspricht. Dieser Filtergewebering besteht aus einem Gewebe mit sich in Umfangsrichtung sowie mit sich in Richtung der Rohrachse x erstreckenden Gewebefäden. Von diesen Gewebefäden bestehen die in Achsrichtung sich erstreckenden Fäden 7 aus biegsamem Kunststoff. Von den sich in Umfangsrichtung des Filterringes 6 erstreckenden Gewebefäden bestehen jeweils drei dieser Gewebefäden, die sich an den beiden Rändern des Ringes erstrecken (8), aus Formgedächtnismetall, während die dazwischen befindlichen Gewebefäden 9 ebenfalls wie die quer dazu verlaufenden Gewebefäden 7 aus biegsamem Kunststoff bestehen.

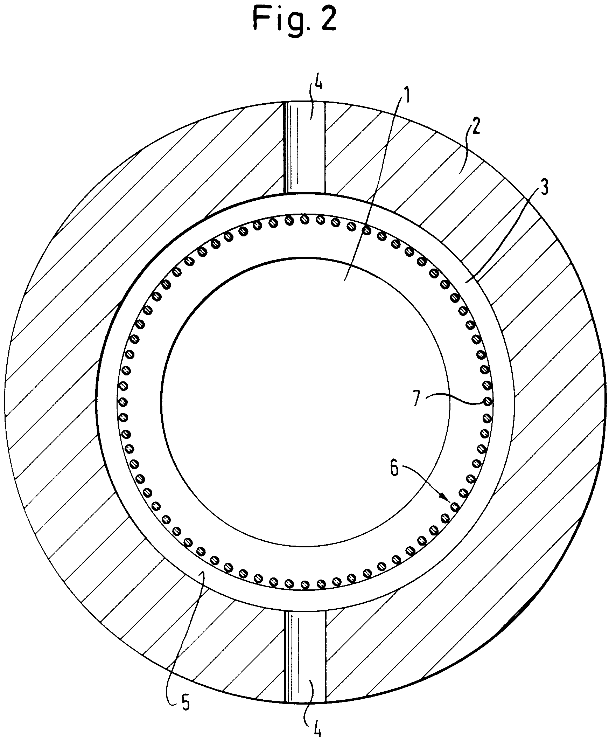

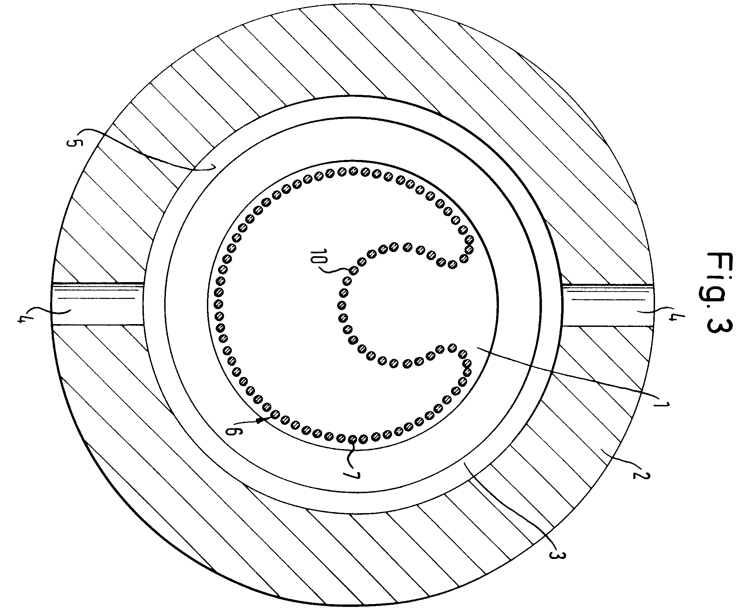

In Fig. 3 ist gezeigt, wie der Filtergewebering 6 durch den Hohlraum 1 des Hohlkörpers hindurch von dessen offener Seite her in die Ringnut 3 eingeschoben wird. Zu diesem Zweck wird der Filtergewebering, der eine ursprüngliche Form hat, die seiner endgültigen Form in der Ringnut 3 entspricht, im Wege des Formgedächtnisprozesses in die in Fig. 3 gezeigte Form verformt. In diesem Verformungsstadium hat der Ring eine Einbeulung 10 von solchem Ausmaß, daß sein Außendurchmesser geringfügig kleiner ist als der Durchmesser des Hohlraumes 1. In dieser Verformung wird der Ring 6 durch den Hohlraum 1 hindurch in die Nut 3 eingeführt und der für seine Rückverformung im Formgedächtnisprozeß erforderlichen Temperatur ausgesetzt. Dabei springt der Filtergewebering aus seiner in Fig. 3 gezeigten Verformung in seine in Fig. 2 gezeigte Ausgangsform zurück, in der er sich fest in die Ringnut 3 einlegt.

Die Erfindung ist auch bei Filterringen anwendbar, die keine Kreisform sondern Polygonform haben.

**Patentansprüche**

1. Gase oder Flüssigkeiten aufnehmender oder von diesen durchströmter, an mindestens einer Seite offener Hohlkörper, insbesondere Rohrstück oder Zylinderkörper, welcher Hohlkörper mindestens eine Wanddurchbrechung (4) in seiner einen Hohlraum (1) umschließenden Wand (2) hat, die in den Hohlraum einmündet und an der Einmündung von einem Filtergewebering (6) überspannt wird,
dadurch **gekennzeichnet,** daß
dieser Filtergewebering (6) in eine an der Innenseite der Wand (2) angeordnete Ringnut (3) eingesetzt ist, in welche die Wanddurchbrechung einmündet, und Gewebefäden (7, 8, 9) hat, die mindestens zum Teil aus einem Formgedächtnismetall bestehen, das bei zur Montage vorausgegangener Verformung durch Erwärmung sich in seine ursprüngliche Form zurückbildet.

2. Hohlkörper nach Anspruch 1,
dadurch **gekennzeichnet,** daß
der Filtergewebering (6) ohne Randeinfassung ausgebildet ist.

3. Hohlkörper nach Anspruch 1,
dadurch **gekennzeichnet,** daß
der Filtergewebering (6) eine Randeinfassung aus biegsamem Material wie Kunststoff oder dergleichen hat.

4. Hohlkörper nach Anspruch 1,
dadurch **gekennzeichnet,** daß
die aus einem Formgedächtnismetall bestehenden Gewebefäden (8) sich in Umfangsrichtung des Filtergeweberinges (6) erstrecken.

5. Hohlkörper nach Anspruch 4,
dadurch **gekennzeichnet,** daß
die aus Formgedächtnismetall bestehenden Gewebefäden (8) sich an den Rändern des Filtergeweberinges befinden.

6. Hohlkörper nach Anspruch 1,
dadurch **gekennzeichnet,** daß
das Filtergewebe mehrere aufeinanderliegende Lagen von Gewebefäden aus Formgedächtnismetall hat.

7. Hohlkörper nach Anspruch 1,
dadurch **gekennzeichnet,** daß
der Filtergewebering (6) mit seiner Außenkontur zumindest stellenweise am Boden der Ringnut (3) anliegt.

8. Verfahren zum Einsetzen eines Filtergeweberinges mit aus Formgedächtnismetall bestehenden Gewebefäden in eine Ringnut an der Innenseite der Wandung eines Hohlkörpers nach Anspruch 1, in welche Nut mindestens eine Wanddurchbrechung einmündet,
dadurch **gekennzeichnet,** daß
der Filtergewebering vor seinem Einbringen in den Hohlkörper eine der Umfangskontur des Bodens der Ringnut entsprechende Außenkontur hat und zum Einbringen in den Hohlkörper mit mindestens einer solchen Einfaltung versehen wird, daß seine Außenkontur einen Querschnitt hat, der kleiner ist als der kleinste Querschnitt des Hohlraumes des Hohlkörpers, daß der Filtergewebering in dieser Verformung durch den Hohlraum hindurch in die Ringnut eingeführt und daraufhin unter Erwärmung im Formgedächtnisverfahren auf seine ursprüngliche Außenkontur zurückgebracht wird, in der er innerhalb der Ringnut liegt.

9. Filtergewebering zur Durchführung des Verfahrens nach Anspruch 8,
dadurch **gekennzeichnet,** daß
sein Filtergewebe von Gewebefäden (7, 8, 9) gebildet ist, die mindestens zum Teil aus einem Formgedächtnismetall bestehen, das bei zur Montage unter Erwärmung vorausgegangener Verformung durch erneute Erwärmung sich in seine ursprüngliche Form zurückbildet.

# Fig.1

# Fig. 2

# Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-2 802 571 (RAYCHEM) <br> * Ansprüche 21,23; Figuren 1,2 * <br> --- | 1 | B 01 D 35/02 <br> C 22 F 1/00 |
| A | DE-A-3 007 307 (BBC) <br> * Ansprüche 1,4; Figuren 1-5 * <br> --- | 1 | |
| A | DE-A-2 041 807 (RAYCHEM) <br> * Ansprüche 1-3,7,21 * <br> --- | 1 | |
| A | DE-A-2 355 901 (RAYCHEM) <br> * Anspruch 1 * <br> --- | 1 | |
| A | DE-B-2 231 922 (RAYCHEM) <br> * Anspruch 1 * <br> --- | 1 | |
| A | DE-A-2 737 642 (G. SCHULZ-PRUSS) <br> * Anspruch 1; Figuren 1,2,6-8 * <br> --- | 1 | |
| A | DE-U-7 906 742 (ATOMAC DIETER BRUETSCH) <br> * Figur * <br> --- | 1 | **RECHERCHIERTE SACHGEBIETE (Int. Cl.5)** |
| A | DE-U-1 766 550 (J. LORCH) <br> * Figur * <br> ----- | 1 | B 01 D 35/02 <br> B 01 D 39/00 <br> B 01 D 39/10 <br> B 01 D 39/12 <br> C 22 F 1/00 |

Der vorliegende Recherchenbericht wurde für alle Patentansprüche erstellt

| Recherchenort | Abschlußdatum der Recherche | Prüfer |
|---|---|---|
| BERLIN | 02-08-1991 | KUEHN P |